(19) Europäisches Patentamt
European Patent Office
Office européen des brevets

(11) Publication number: **0 435 066 A2**

# (12) EUROPEAN PATENT APPLICATION

(21) Application number: **90123874.1**

(22) Date of filing: **12.12.90**

(51) Int. Cl.5: **C08F 2/06**, C08F 20/06, C08F 22/02

(30) Priority: **29.12.89 US 459044**

(43) Date of publication of application: **03.07.91 Bulletin 91/27**

(84) Designated Contracting States: **AT BE CH DE DK ES FR GB GR IT LI LU NL SE**

(71) Applicant: **The B.F. Goodrich Company**
**3925 Embassy Parkway**
**Akron Ohio 44313(US)**

(72) Inventor: **Hsu, Chin Chien**
**160 Williamsburg Drive**
**Avon Lake, Ohio 44012(US)**
Inventor: **Koebel, Ralph Francis**
**331 Timberlane**
**Avon Lake, Ohio 44023(US)**
Inventor: **Lochhead, Robert Yeats**
**32705 Greenwood Court**
**Avon Lake, Ohio 44012(US)**
Inventor: **Nagarajan, Madukkarai Krishnarao**
**32568 Belle Road**
**Avon Lake, Ohio 44012(US)**
Inventor: **Sauer, Christina Elizabeth**
**1563 Victoria Avenue**
**Lakewood, Ohio 44107(US)**
Inventor: **Masler, William Frank, III**
**1026 Mattingly Road**
**Hinckley, Ohio 44233(US)**

(74) Representative: **von Kreisler, Alek, Dipl.-Chem. et al**
**Patentanwälte Von Kreisler-Selting-Werner,**
**Deichmannhaus am Hauptbahnhof**
**W-5000 Köln 1(DE)**

## (54) Oxidation resistant polymeric thickeners and method relating thereto.

(57) The present invention relates to polymeric thickeners which are stable in the presence of oxidizing agents or the like. More specifically, the preferred thickeners of the present invention are directed to polyacrylic-type polymeric thickeners, wherein the thickener can be place in a .15 molar aqueous solution of an oxidizing agent at 25° C for greater than 60 days without exhibiting phase separation or a loss in viscosity of greater than 50%, whereby the oxidizing agent has an oxidation potential of greater than .75 volts and less than 1.0 volt.

EP 0 435 066 A2

Xerox Copy Centre

# OXIDATION RESISTANT POLYMERIC THICKENERS AND METHOD RELATING THERETO

## BACKGROUND OF THE INVENTION

### Field of the Invention

The present invention relates generally to hydrophilic polymeric thickeners which are stable in the presence of any one of a number of oxidizing agents, particularly oxidizing agents having an oxidation potential of less than about 1.25 volts. More specifically, the preferred thickeners of this invention are resistant to decomposition for at least 60 days when immersed in a 25° C .15 molar aqueous solution of an oxidizing agent which has an oxidation potential between .75 and 1.0 volts.

### Discussion of the Prior Art

Cross-linked polymers comprising carboxylic acids are known generally. In U.S. Patent 4,758,641 to Hsu a polycarboxylic acid polymer is described comprising an olefinically unsaturated carboxylic acid containing 3 to 5 carbon atoms having a cross linker selected from polyalkenyl polyethers of polyhydric alcohols containing more than one alkenyl group per molecule wherein the polyhydric alcohol contains at least 4 carbon atoms and at least three hydroxyl groups, and wherein an initiator is selected from the group consisting of peroxides and peroxydicarbonates.

In U.S. Patent 4,509,949 to Huang copolymers of cross-linked acrylic acids and esters as water thickening agents are described. The polymers are 98.9 to 95.5 wt.% olefinically unsaturated carboxylic acids containing at least one activated double bond, 1 to about 3.5 wt.% of an alkyl acrylate ester of acrylic or methacrylic acid wherein the alkyl group contains 10 to 30 carbon atoms and .1 to less than I wt.% of a crosslinking monomer is described as a water thickening agent.

U.S. Patent 4,420,610 to Sehm is directed to a solvent exchange process using a slurry of cross-linked carboxylic acid polymer. U.S. Patent 3,915,921 to Schlatzer, Jr. is directed to copolymers of a carboxylic acid monomer and one or more 10 to 30 carbon atom alkyl acrylate esters as a thickening agent and emulsifier.

As exemplified by the patents discussed above, cross-linked carboxylic acid copolymers have been used generally as thickeners. However, such thickeners have generally not exhibited good stability in the presence of oxidizing agents and the like.

U.S. 4,867,896 to Elliott et al. is directed to a cleaning composition containing cross-linked polymeric thickeners and hypochlorite bleach. Elliott teaches the use of polyacrylic-type polymeric thickeners, wherein the thickener is crosslinked with trivinylcyclohexane, 1,5-hexadiene, trivinylbenzene, divinylbenzene or polybutadiene.

The preferred thickeners of the present invention are also polyacrylic-type polymeric compositions and can also include crosslinkers as taught in Elliot. Indeed, nummerous embodiments of the present invention are comprised substantially of the thickener components taught in Elliot. However, the thickeners of the present invention generally provide superior oxidation resistance and superior thickener performance over time than the Elliot thickeners due to a superior physical structure of the thickener on a molecular level which is not taught in Elliot.

## OBJECTS OF THE INVENTION

It is an object of the present invention to provide a polymeric thickener which exhibits long term stability in aqueous systems containing one or more oxidizing agents.

It is a further object of the present invention to provide a carboxylic acid copolymer crosslinked with a polyalkenyl cycloaliphatic, an aliphatic polyene, an allyl saccharide, a polyallyl ether or the like, wherein the thickener can be place in a .15 molar aqueous solution of an oxidizing agent at 25° C for greater than 60 days without exhibiting phase separation or a loss in viscosity of greater than 50%, wherein the oxidizing agent has an oxidation potential of greater than .75 volts and less than 1.0 volts.

Other objects and features of the present invention will be become apparent to those of ordinary skill in the art upon further reading of this specification and claims.

## SUMMARY OF THE INVENTION

The preferred embodiment of the present invention is directed to a polymeric thickener composition comprising a polymeric reaction product of: 1. a primary monomer comprising a monounsaturated monocarboxylic or dicarboxylic acid, or a salt or anhydride thereof; and 2. a crosslinking monomer. The most preferred crosslinking monomers are:

(1) trivinyl cyclohexane, preferably in an amount of about 0.1% to 7% by weight of monomers,

(2) an aliphatic diene, preferably in an amount of about 0.5 to about 8%, or

(3) a polyallyl ether, in an amount of about .5 to 7% by weight of monomers,

(4) a monomeric polyether of a mono or poly saccharide in which the hydroxyls are etherfied with allyl groups in an amount of about .5 to 7%, or

(5) a combination thereof in a total amount of about 0.1% to about 10% by weight of monomers.

The thickener preferably has a weight average molecular weight greater than about 100,000 and is preferably polymerized in a mixed solvent system comprising a polar organic solvent and a nonpolar solvent. Preferably, the concentration of monomer in the reaction media is from about .5 to about 40% by weight, and the reaction media comprises water in an amount less than about 3% by weight of solvent. In the preferred embodiment, the reaction mixture comprises a free radical initiator in an amount from about 0.1% to about 1.0% based on total amount of monomers used.

The preferred principal monomer is an olefinically unsaturated carboxylic acid having 3 to 5 carbon atoms, such as acrylic acid, methacrylic acid, ethacrylic acid, alpha-chloroacrylic acid, alpha-cyanoacrylic acid, itaconic acid, maleic acid, maleic anhydride, or mixtures thereof. The more preferred principal monomer is acrylic acid, methacrylic acid, maleic acid, maleic anhydride, or mixtures thereof, and the most preferred principal monomer is acrylic acid.

The thickener of the present invention can preferably be place in a .15 molar aqueous solution of an oxidizing agent at 25°C for greater than 60 days without exhibiting phase separation or a loss in viscosity of greater than 50%, wherein the oxidizing agent has an oxidation potential of greater than .75 volts and less than 1.0 volts.

## DETAILED DESCRIPTION OF THE PREFERRED EMBODIMENT

The polymers of this invention include homopolymers and copolymers, preferably homopolymers. The preferred principal monomers are selected from monounsaturated monocarboxylic and dicarboxylic acids and salts or anhydrides thereof. These preferred principal monomers are preferably selected from olefinically unsaturated monocarboxylic and dicarboxylic acids, more preferably monocarboxylic acids, containing 3 to 5 carbon atoms, and also salts or anhydrides thereof. Suitable monomers in this class include acrylic acid, methacrylic acid, ethacrylic acid, alpha-chloroacrylic acid, alpha-cyanoacrylic acid, itaconic acid, maleic acid and maleic anhydride. In this class of monomers, acrylic acid, methacrylic acid, maleic acid and maleic anhydride are preferred due generally to low cost, ready availability and advantageous polymerized end products. Acrylic acid is most preferred in this class of monomers.

The secondary monomers or comonomers, if any, are selected from monomers which contain at least one terminal $CH_2=C$ or vinylidene group. Such comonomers include acrylic esters which are represented by the formula

$$CH_2 = C-(R')C(O)OR$$

wherein R is an alkyl group containing 1 to 30 carbon atoms. This group of comonomers include the acrylic acid esters with aliphatic groups, wherein R contains 1 to 30, preferably 2 to 20, carbon atoms. In these comonomers, R' is hydrogen or lower alkyl, preferably hydrogen or a methyl group. Examples of suitable aliphatic acrylic esters include decylacrylates, isodecoacrylate, lauroyl acrylate, stearyl acrylate, behenyl acrylate, melissyl acrylate, methyl acrylate, ethyl acrylate, propyl acrylate, isopropyl acrylate, N-butyl acrylates, isobutyl acrylate, N-hexyl acrylate, heptyl acrylate, octyl acrylate, ethylhexyl acrylate, and the corresponding methacrylates.

Other suitable monomers can also be used as secondary comonomers, and these include acrylamidosulfonic acids; acrylic nitriles, such as acrylonitrile; acrylic amides, such as acrylamide; N-alkylol amide, such as N-methylolacrylamide; alpha-olefins of 2 to 12 carbon atoms, such as ethylene and propylene; dienes, such as butadiene, piperylene, ethylidiene norbornene and dicyclopentadiene; vinyl esters, such as vinyl acetate and vinyl benzoate; vinyl aromatics, such as styrene; allyl ethers and ketones, such as vinylmethyl ether and methylvinyl ketone; cycloalkyl acrylates; vinyl halides; and vinylidene halides, such as vinyl chloride and vinylidene chloride; and the like.

The preferred weight ratio of the primary monomer to the secondary monomer is about 90:10, more preferably about 95:5, and most preferrably greater than about 95:5.

The polymers of this invention are preferably crosslinked with a crosslinking agent comprising one or more of the following:

(1) an alkenyl cycloaliphatic, preferrably trivinyl cyclohexane, in a range of about .1 to about 7% by weight, and more preferably in the range of about 1 to about 5% by weight of monomers;

(2) an aliphatic polyene, preferably an aliphatic diene, in the range of about .5 to about 8%, and more preferably in the range of about .75 to 6% by weight of monomers;

(3) a polyallyl ether, preferrably trimethylolpropane diallyl ether in an amount of about .5 to 7% more preferably 1% to 4% by weight of monomers;

(4) a monomeric polyether of a mono or poly saccharide in which the hydroxyls are etherfied with allyl groups, preferrably an allyl sucrose, in an amount of about .5 to 7% more preferably 1% to 4% by weight of monomers; or

(5) a combination thereof in a total amount of about 0.1% to about 10% more preferably 1% to 4% by weight of monomers.

The alkenyl cycloaliphatic can be defined as follows:

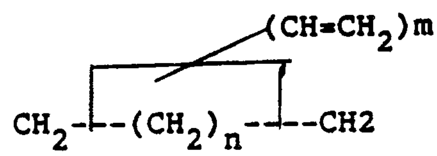

wherein n and m are the same or different and are greater than 1. The trivinyl cyclohexane of this invention can be defined as follows:

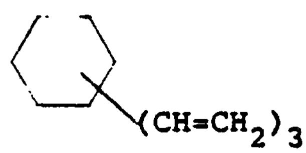

The aliphatic diene of this invention can be defined as follows:

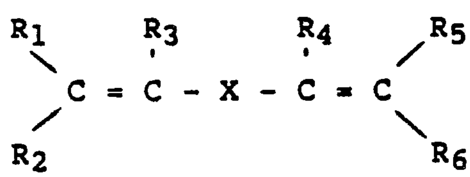

wherein:

$R_1$ through $R_6$ can be H, aliphatic or aromatic groups; and

X can be absent, or divalent alkyl, aryl, or aralkyl group having 1 to 12 carbons $C_1$ - $C_{12}$.

Examples of such aliphatic dienes include: butadiene, isoprene, divinylbenzene, 1,8-nonadiene, 1,7-octadiene, 1-5-hexadiene.

The polyallyl ether can be defined as follows

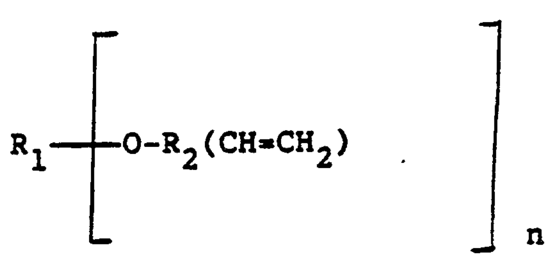

wherein R1 and R2 can be the same or different and are aliphatic and/or aromatic, and R2 is preferrably of the following formula:

$$(-CH_2-)_n$$

wherein n is 0, 1, 2, or 3. The most preferred allyl ether is trimethylolpropane diallyl ether. The crosslinker can be a polyalkenyl polyether of a polyhydric alcohol, which polyhydric alcohol contains at least 4 carbon atoms to which are attached at least 3 hydroxy groups, the polyether containing more than one alkenyl ether group per molecule. Preferrably, the alkenyl groups are attached to a terminal methylene grouping. Compounds of this class are readily produced for example by a Williamson-type synthesis, in which an alkenyl halide or a mixture of such halides, such as allyl chloride, allyl bromide, methyallyl chloride, methallyl bromide and others is reacted with a strongly alkaline aqueous solution of one or more of the polyhydric alcohols. The product of such a synthesis usually is a complex mixture of polyethers containing varying numbers of ether groups on each molecule.

Since the efficiency of the polyether cross-linking agent increases with the number of potentially polymerizable groups on the molecule, it is much preferred to utilize polyethers containing an average of two or more alkenyl ether groupings per molecule. The polyvinyl polyethers of the polyhydric alcohols within the above broad class are produced by reacting acetylene with the polyhydric alcohol (or an alcoholate thereof) in a Reppe-type vinylation synthesis. The polycrotyl ethers of the polyhdric alcohols also are useful although they do not contain a terminal $CH_2=C<$ grouping.

Illustrative polyhydric alcohols of the above-described class that may be utilized in the preparation of the polyalkenyl polyether cross-linking agent include the butane triols such as 1,2,3-butane triol, 2,3,4-trihydroxy butyric acid, the aldotetroses such as erythrose and threose, ketotetroses such as erythrulose; the aldopentoses such as arabinose, xylose, lyxose, and ribose; ketopentoses such as araboketose and xyloketose; aldohexoses such as glucose, galactose, mannose, gulose, idose, (alose, allose and the like; ketohexoses such as fructose or levulose, sorbose and the like; other sugars including the mono-, di-, tri- and polysaccharides such as sucrose, maltose, lactose and raffinose; the hexosans, pentosans and hexosan-pentosans, the galactomannan and glucomannan gums, starch and others; reduced forms of the above and other sugars and polysaccharides such as the so-called "sugar alcohols" erythritol, xylitol, mono-, di- and tri-pentaerythritol, arabitol, mannitol, iditol, tolitol, sorbitol, inositol, dulcito), and others; the oxidized derivatives of the sugars in which the oxidation has not been carried to the point where the original monosaccharide carbon chain unit is broken such as the mono- and di-carboxylic "sugar acids" including gluconic acid, glucuronic acid, galactonic acid, galacturonic acids, saccharic acid, mucic and pectic acids and other polyhydric alcohols of the class described.

A preferred class of polyhydric alcohols for use in the production of the polyalkenyl polyether monomer are known as the oligosaccharides, which are defined as containing from one to four monosaccharide units. In addition to the oligosaccharides themseslves, their reduction products such as the alcohols, keto-alcohols and aldo-alcohols and their oxidation products which retain the original saccharide chain such as the sugar acids, the keto-acids, the aldo-acids and the like can be used. Illustrative saccharides of this class are the monosaccharides such as glucose, galactose, fructose, sorbose, rhamnose, and the like, disaccharides such as sucrose, arabinose, maltose, lactose, and the like, trisaccharides such as raffinose and others. Of these the disaccharide, sucrose, is much preferred because of its ready availability and its ability to produce polyethers of great reactivity with carboxylic monomers.

The crosslinking agents must have an appropriate reactivity relative to the monomer system used. If the reactivity is too great, crosslinking will occur primarily in the initial stages of the polymerization, and this is generally undesirable. Furthermore, if the reactivity is too great, the crosslinker may become involved in unintended or undesirable reactions, such as by polymerizing with certain components of the monomer system.

On the other hand, if the crosslinker is not sufficiently reactive, it will not sufficiently crosslink. Consequently ordinary skill and experimentation may be necessary for any particular application of the present invention.

The reaction media is preferrably a mixture of a polar and non-polar solvent. Preferably the reaction media comprises two or more solvents which are preferably liquid at room temperature, or at least one is a liquid so that it can solubilize the other. The preferred reaction media comprises a mixture of one or more polar organic solvents with one or more non-polar organic solvents.

The polar organic solvents used are preferably those normally liquid at room temperature ($25^\circ$ C.) and

are moderate to strongly hydrogen bonded, such as conventional ketone, ester and alcohol solvents. The non-polar organic solvent(s) to be mixed with the polar organic solvent(s) in the preparation of a mixed reaction medium include straight-chain, branched-chain, and cyclic aliphatics which contain 4 to 12, preferably 5 to 9, carbon atoms. The relative weight ratio of at least one polar organic solvent to at least one non-polar organic solvent is preferably in the range of 80:20 to 5:95, and especially between 2:1 and 1:2.

The amount of reaction medium will normally be in weight excess of the monomer or monomers to be polymerized, and the concentration of monomers in solution may vary from about 1% by weight monomer(s) to about 50% by weight monomer(s). The amount of the monomer(s) polymerized in the reaction medium is normally about 10 to 25% by weight.

The amount of water in the reaction media should be kept as low as possible and should not be allowed to exceed 3% by weight of the solvents. More preferably, the amount of water should be kept below 1% and more preferably below 0.3%. Desirable results can be achieved by continuously removing water from the solvent as by passing the solvent through a distillation column or through a bed of dessicant or a substance which will remove water from the solvent.

Polymerization is preferably conducted in a closed vessel using an inert atmosphere of autogenous or artificially induced pressure. Alternatively, polymerization can be conducted using an open vessel under reflex at atmospheric pressure. The temperature of the polymerizations is preferably from about 40 to about 85° C, and most preferably 45 to 80° C, depending on the type of initiator selected.

Polymerization of the monomer in the solvent medium is preferably carried out in the presence of a free radical initiator. Suitable free radical initiators are those which will convert essentially all of the monomer to polymer at a particular reaction temperature. Examples of such free radical initiators include di(2-ethylhexyl) peroxydicarbonate, di(sec-butyl) peroxydicarbonate, di(isopropyl) peroxydicarbonate, dicyclohexyl peroxydicarbonate, dicetyl peroxydicarbonate, di(N-propyl) peroxydicarbonate, lauroyl peroxide, and other like peroxides, peroxyesters, hydroperoxides and peroxydicarbonates. The di(2-ethylhexyl) peroxydicarbonate is generally effective at a reaction temperature of 45 to 55° C whereas lauroyl peroxide is generally effective at a reaction temperature of about 70 to 80° C. The amount of the initiator is generally less than 2% by weight, preferably 0.1 to 1% based on the weight of the monomer charge. Other suitable free radical initiators included 2,2'-azobis(2,4-dimethyl-pentanenitrile), 2,2'-azobis(2-methylbutanenitrile), and 1,1'-azobis-(cyclohexanecarbonitrile).

If the reaction media comprises a polar organic solvent then to prevent gelling of the polymer, at least a part of the carboxyl groups should be generally neutralized with a Group 1-A metal hydroxide, oxide, carbonate or the like (a list of Group 1-A metals cans be found in any standard periodic Table of Chemical Elements). Examples of 1-A metals include lithium, sodium, potassium and cesium. Alternatively, the carboxyl groups can be neutralized with the reaction product of a 1-A metal compound and ammonia or certain amines where the partial polymeric salt is less soluble in the reaction medium, such amines include morpholine mono-, di- and triethanol amine, and monopropanol amine.

The polymerization process is preferably carried out with partial acid neutralization when the reaction media primarily comprises a polar organic solvent. Partial neutralization generally requires neutralization of up to 10% of the carboxylic acid groups in the carboxyl monomer neutralized. Preferably greater than 0.5 wt. % of the monomer carboxyl groups are formed into a salt. More preferably, greater than 1 wt. % and up to about 10 wt. % of the carboxyl groups which are neutralized are converted to the equivalent salt prior to polymerization. Normally polar solvent medium to strongly hydrogen bonded solvents are not suitable as solvents for carboxyl containing polymers free of the salts, because they swell the free acid containing polymers to gels which is undesirable.

## EXAMPLES

The preferred embodiment is further demonstrated by the following examples.

## EXAMPLE 1

180 grams of acrylic acid was neutralized with 5.18 grams of anhydrous potassium carbonate. This preneutralized acrylic acid was added to a 2-liter jacketed glass reactor equipped with a reflux condenser along with 1320 grams of ethyl acetate, and 1.242 grams of a crosslinking monomer, 1,7-octadiene. The reactor contents were premixed, purged with nitrogen for 30 minutes and then 0.90 grams of di-(2-ethylhexyl) peroxydicarbonate was added to the reaction mixture. The mixture was then heated to temperature of 50° C. The reaction was allowed to proceed for six hours. The resulting slurry was dried in a rotary vacuum dryer at 100° C - 110° C for sixteen hours. Mucilages of 0.5 wt. % of this resultant polymer

were prepared in water and. neutralized to a pH of 7.3 - 7.8 and viscosities measured with Brookfield RVT viscometer at 20 rpm. The 0.5 wt % and 1.0 wt % viscosities were 9,550 and 12,800 cps, respectively.

EXAMPLE 2

Following the same procedure as in Example 1, 1.404 grams of 1,8-nonadiene was used instead of the 1,7-octadiene. The resultant polymer yielded 0.5 wt % and 1.0 wt % mucilage viscosities of 6450 cps and 9500 cps, respectively.

EXAMPLE 3

1075 grams of n-hexane, 171 grams of acrylic acid, 3.94 grams of 1,5-hexadiene, and 0.875 grams of lauroyl peroxide were employed in a polymerization in a 2-liter reactor as described in Example 1. The reaction was carried out at a reaction temperature of 67° C for six hours. The reaction slurry was dried in a rotary dryer as described in Example 1. The resultant polymer yielded 0.5 wt % and 1.0 wt % mucilage viscosities of 5300 cps and 9100 cps, respectively.

EXAMPLE 4

1075 grams of n-hexane, 172.38 grams of acrylic acid, 2.625 grams of 1,2,4-trivinyl cyclohexane, and 0.875 grams of lauroyl peroxide were employed in a polymerization at 67° C reaction temperature for six hours. The resultant polymer after drying for 16 hours, as in Example 1, yielded mucilage viscosities of 45,700 cps and 73,000 cps for 0.5 wt % and 1.0 wt %.

EXAMPLES 5-12

These examples demonstrate the use of trivinyl cyclohexane (TVCH) and 1.5-hexadiene as crosslinking monomer at various levels, using a mixture of ethyl acetate and cyclohexane as polymerization medium. The recipe comprised 165 grams of acrylic acid, 720.9 ethyl acetate, 614.1 g cyclohexane, and 0.495 g di-(2-ethylhexyl) peroxydicarbonate, and a crosslinking monomer, as presented in Table 1. The recipe mixture was reacted at a reaction temperature of 50° C for six hours. The reactor contents were dried in a vacuum rotary dryer at 100-110° C for sixteen hours, and the resultant polymers were evaluated for 0.5 wt. % and 1.0 wt. % mucilage viscosities as in Example 1. The resultant viscosities are shown in Table 1 along with the type and amounts of crosslinker. As can be seen by Table 1, the resultant polymers yielded 0.5 wt % and 1.0 wt % mucilage viscosities.

**TABLE 1**

**RECIPES BASED ON TRIVINYLCYCLOHEXANE AND 1,5-N-HEXADIENE AS CROSSLINKING MONOMER AND RESULTANT MUCILAGE VISCOSITIES**

| Expt'l. No. | Crosslinking Monomer Type | Crosslinking Monomer Wt. Grams | Resultant Mucilage Viscosities, cps @ 20 rpm 0.5 wt % | Resultant Mucilage Viscosities, cps @ 20 rpm 1.0 wt % |
|---|---|---|---|---|
| 5 | TVCH | 0.825 | 200 | 370 |
| 6 | TVCH | 1.650 | 4,580 | 7,600 |
| 7 | TVCH | 2.475 | 29,200 | 31,500 |
| 8 | TVCH | 4.950 | 70,000 | 124,000 |
| 9 | HD | 4.125 | 3,080 | 6,900 |
| 10 | HD | 5.775 | 23,500 | 26,000 |
| 11 | HD | 6.600 | 43,200 | 61,000 |
| 12 | HD | 9.900 | 74,000 | 106,000 |

The above detailed discussion has been provided merely to aid in the understanding of the present invention. The limitations of the present invention are defined exclusively in the following claims, and nothing within this specification is intended to provide any further limitations thereto.

## Claims

1. An oxidation stable thickener comprising:
   a hydrophilic polymeric material having a muscilage viscocity greater than about 1000 centipoise based upon a 1% by weight aqueous polymer solution at 20 °C and measured with a Brookfield RVT Viscometer at 20 rpm, wherein said material will exhibit less than a 50% decrease in viscocity when placed in a .15 molar aqueous solution of an oxidizing agent at 25 °C for a period of time greater than 60 days, said oxidizing agent having an oxidation potential of greater than .75 volts and less than 1 volt.

2. The thickener of Claim 1 wherein the polymeric material comprises the polymeric reaction product of a mixture of reactants polymerized in a reaction medium, wherein the reaction media comprises a mixed solvent comprising a polar organic solvent and a nonpolar solvent, and wherein the mixture of reactants comprises:

a principal monomer, wherein said principal monomer is a monounsaturated monocarboxylic or dicarboxylic acid, or a salt or anhydride thereof.

3. The thickener of Claim 2 wherein the reactants further comprise a crosslinking monomer wherein the crosslinking monomer is further defined as comprising a polyalkenyl cycloaliphatic, an aliphatic polyene, a polyallyl ether, a monomeric polyether of a mono or poly sacharide in which the hydroxyls are etherfied with allyl groups, and wherein the crosslinking monomer is present in an amount within the range of about .1% to about 10% by weight of the reaction mixture, and the weight ratio of the principal monomer to a secondary monomer is greater than about 90:10, whereby the polymeric reaction product is further defined as having a weight average molecular weight greater than about 100,000.

4. The thickener of Claim 3 wherein the polar organic solvent is further defined as an organic ketone, ester, ether, saturated alcohol or halogenated aliphatic, and wherein the non-polar solvent is further defined as benzene, n-hexane, n-heptane, or cyclohexane;

5. The thickener of claim 4 wherein the reaction media is further defined as comprising one or more polar organic solvents and one or more non-polar organic solvents in a weight ratio of from about 30:70 to 70:30.

6. The thickener of Claims 5 wherein the concentration of monomer in the reaction media is from 5 to 40% by weight.

7. The thickener of Claims 6 wherein the reaction media comprises water in an amount less than about 3% by weight of solvent.

8. The thickener of Claim 7 wherein the reaction media contains less than about 0.2% of water by weight of solvent.

9. The thickener of Claim 8 wherein the mixture of reactants further comprises a free radical initiator in an amount of from 0.1% to about 1.0% based on total amount of monomers used.

10. The thickener of Claim 2 wherein the mixture of reactants further comprises up to 10% of alkali salts of acrylates.

11. The thickener of Claim 6 wherein the crosslinking monomer is further defined as
(1) trivinyl cyclohexane in an amount of about .1% to 7% by weight of monomers,
(2) an aliphatic diene in an amount of about 0.5 to about 8% by weight of monomers, or
(3) an allyl sucrose in an amount of about .1 to 7% by weight of monomers,
(4) a trimethylolpropane diallyl ether in an amount of about .1 to 7% by weight of monomers, or
(5) a combination thereof in a total amount of about 0.1% to about 10% by weight of monomers.

12. The thickener of Claim 11 wherein the principal monomer is further defined as acrylic acid, methacrylic acid, ethacrylic acid, alpha-chloroacrylic acid, alpha-cyanoacrylic acid, itaconic acid, maleic acid, maleic anhydride, or mixtures thereof.

13. The thickener of Claim 12 wherein the principal monomer is further defined as acrylic acid, methacrylic acid, maleic acid, maleic anhydride, or mixtures thereof.

14. The thickener of Claim 13 wherein the principal monomer is acrylic acid.

15. Method for manufacturing an oxidation stable polymeric material, said method comprising:
polymerizing a monomer charge in a reaction medium,
said monomer charge comprising:
a primary monomer consisting of an olefinically unsaturated carboxylic acid of 3 to 5 carbon atoms, a salt of such acids, an anhydride of such acids, or mixtures thereof, wherein the monomer charge comprises about 0% to about 10% by weight Group 1-A metal compound;
a secondary monomer consisting of a copolymerizable comonomer having at least one terminal

$CH_2=C$ or vinylidene group, wherein the ratio of primary monomer to secondary monomer is greater than about 50:50 by weight;

a crosslinking monomer, wherein said crosslinking monomer comprises a polyalkenyl cycloaliphatic, an aliphatic polyene, an allyl mono or poly saccharide or a polyallyl ether, and wherein said crosslinking monomer is present in an amount within the range of about, .1% to about 10% by weight based upon total weight of the monomer charge;

the reaction medium comprising one or more polar organic solvents and one or more non-polar organic solvents in a ratio of from about 30:70 to about 70:30 by weight, and wherein the ratio of monomers to the reaction medium is from about 0.1:99.9 to about to about 60:40, and a water concentration in the reaction media is kept to less than about 3% by weight of the reaction media.

**16.** The method of Claim 14 wherein the crosslinking monomer is further defined as
(1) trivinyl cyclohexane in an amount of about .1 to about 7% by weight of monomers,
(2) an aliphatic diene in the range of about 0.1% to 7% by weight of monmomers, or
(3) an allyl sucrose in an amount of about 0.1% to about 7% by weight of monomers.
(4) a trimethylolpropane diallyl ether in an amount of about .1 to 7% by weight of monomers, or
(5) a combination thereof in a total amount of about 0.1% to about 10% by weight of monomers.

**17.** The method of Claim 15 wherein the polar organic solvent is ethyl acetate and the non-polar organic solvent is comprises cyclohexane, hexane, benzene, toluene, heptane or halogenated solvents.

**18.** The method of Claim 16 wherein the solvent mixture is ethyl acetate and cyclohexane.

**19.** The method of Claim 17 wherein the solvent mixture is ethyl acetate and n-hexane.

**20.** The polymeric thickener product synthesized according to the method of Claim 15, wherein the product has a viscosity as defined in Claim 1 of greater than 1000 centipoise, and wherein the thickener can be place in a .15 molar aqueous solution of an oxidizing agent at 25° C for greater than 60 days without exhibiting phase separation or a loss in viscosity of greater than 50%, wherein the oxidizing agent has an oxidation potential of greater than .75 volts and less than 1 volt.